# EUROPEAN PATENT SPECIFICATION

(11) **EP 3 059 486 B1**
(45) Date of publication and mention of the grant of the patent: **06.02.2019**
(21) Application number: 14853803.6
(22) Date of filing: 26.08.2014
(51) Int. Cl.: F16M 11/10

(54) **SUPPORTING STRUCTURE, PLAYER AND MOBILE DEVICE USING SAME**
UNTERSTÜTZUNGSSTRUKTUR, PLAYER UND MOBILE VORRICHTUNG DAMIT
STRUCTURE DE SUPPORT, JOUEUR ET DISPOSITIF MOBILE UTILISANT CELUI-CI

(30) Priority: 16.10.2013 CN 201320640581 U
(43) Date of publication of application: 24.08.2016
(73) Proprietor: Chigoo Interactive Technology Co., Ltd., Xinwu District Wuxi Jiangsu 214028 (CN)
(72) Inventor: CHEN, Tao, Xinwu District, Wuxi Jiangsu 214028 (CN); PAN, Chuanrong, Xinwu District, Wuxi Jiangsu 214028 (CN); LAN, Weijian, Xinwu District, Wuxi Jiangsu 214028 (CN); ZHOU, Hua, Xinwu District, Wuxi Jiangsu 214028 (CN); YANG, Yong, Xinwu District, Wuxi Jiangsu 214028 (CN); HAN, Rong, Xinwu District, Wuxi Jiangsu 214028 (CN)
(74) Representative: Molinari, Marinella
(86) International application number: PCT/CN2014/085176
(87) International publication number: WO 2015/055050

(56) References cited:
- EP-A2- 1 887 273
- CN-U- 201 882 122
- CN-U- 203 103 711
- CN-U- 203 500 788
- CN-Y- 2 911 878
- JP-A- H1 010 642
- US-A1- 2006 007 191
- US-A1- 2010 051 761

## Description

### TECHNICAL FIELD

The present invention relates to a supporting structure, in particular to a supporting structure being capable of adjusting angles of a supported article, a player employing the supporting structure and a mobile device employing the player.

### BACKGROUND ART

Air travel has become more and more common. Since airport area is too large, passengers may have to ask for directions several times before reaching a registration desk. In this case, a trolley with a multimedia player for broadcasting and guiding emerges, which provides convenience for users. However, various problems may arise when passengers use the trolley, for example: some passengers may use the player as a temporary dining-table for a momentary convenience and put drink and foods on the surface of the player's display screen, and some passengers may use the player as a child seat to allow children sitting on the player. In addition, since overall assembling process and technology of a trolley's frame are not yet perfect, a stress is easily to generate in the interior of the frame. This stress exists for long, which may undermine the overall structure of the player. Such phenomenon is likely to cause damage to the trolley's player, and may have a safety problem. A typical supporting structure is shown in US2010/0051761.

### SUMMARY OF THE INVENTION

An object of the present invention is to provide a supporting structure capable of adjusting angles of a supported member. The supporting structure comprises a support body, stationary shafts and stoppers disposed at opposite ends of said support body and being coaxial with the stationary shafts, wherein each of said stationary shafts is provided with an arc-shaped notch matching with each of the stoppers circumferentially, so that the stoppers are rotatable about the stationary shafts along the arc-shaped notch, which causes the supported body to rotate about the stationary shaft, thereby allowing an installing angle of the supported body on a mobile device, such as trolleys, etc., to be set and adjusted to meet different needs of users for angles of the supported member.

According to claim 1, the stopper comprises a stopper body and a stopper projection provided on an inner wall of the stopper body. The stoppers can rotate stably along the stationary shafts through cooperation of the stopper bodies and the stationary shafts.

According to claim 1, the stopper body is U-shaped. The U-shaped stopper body can facilitate a rotation of the stopper about the stationary shaft. Meanwhile, the bottom of the U-shaped stopper body can prevent foreign material from entering into the arc-shaped notch, and thus effectively avoid failure of the stopper's rotation about the stationary shafts due to entering of the foreign material into the arc-shaped notch.

According to claim 1, the fixed shaft comprises a shaft base and a shaft portion in a T-shaped connection with the shaft base, the arc-shaped notch is provided at an end of the shaft portion connected to the stationary shaft base. Thus, the stoppers and the stationary shafts are integrated through the cooperation with each other, allowing a steady rotation of the supporting structure and enhancement of an entire strength of the same.

In some embodiments, the shaft base and the shaft portion have a hollow structure, which reduces the weight of the supporting structure and saves makings.

In some embodiments, a central angle of the arc-shaped notch is an acute angle. Thus, the supported member may rotate about the stationary shafts within an acute angle range after installed on the supporting structure, so as to satisfy different needs of users for the orientation of the supported member.

In some embodiments, the outer diameter of the shaft portion is smaller than the inner diameter of an arc portion at the bottom of the stopper body. This may reduce the wear therebetween when the stoppers rotate about the stationary shafts, which causes the rotation of the stoppers more efficiently.

In some embodiments, support plates are disposed on the support body, and an end of the support plate is inserted into the interior of the stationary shafts. After the support body is installed on a movable device, it can prevent the internal structure of the support body from being damaged due to the internal stress of the movable device, which increases the strength of the support body and protect the same. Meanwhile, deformation of the mobile device due to its internal stress can be avoided.

In a further aspect, a player is provided which comprises a player member and a supporting structure mentioned above. The player member comprises a multimedia player device and is disposed in the support body. Thus, the player member can rotate about the stationary shafts along with the stoppers, which provides convenience to users.

According to a further aspect of the invention, there is provided a movable device which comprises a movable device body and a player mentioned above, stationary shafts of the supporting structure of the player are disposed on the movable device body. The player according to the invention can rotate about the stationary shafts so as to prevent the player from being damaged due to the improper use of users when the player can only be disposed horizontally, and meet different needs of users for the orientation of the player.

### BRIEF DESCRIPTION OF THE DRAWINGS

Fig. 1 is a schematic view of a supporting structure according to one embodiment of the invention;
Fig. 2 is a schematic view showing the rear structure of the supporting structure shown in Fig. 1;
Fig. 3 is a schematic view showing a support body and stoppers of the supporting structure shown in Fig. 1;
Fig. 4 is a view taken from direction A of Fig. 3;
Fig. 5 is a schematic view showing a structure of a stationary shaft of the supporting structure shown in Fig. 1;
Fig. 6 is a schematic view of a player according to one embodiment of the invention;
Fig. 7 is a view taken from direction B of Fig.6; and
Fig. 8 is a schematic view of a movable device according to an embodiment of the invention.

### DETAILED DESCRIPTION

The present invention will be described in more details with reference to the drawings as follows.

### Example 1

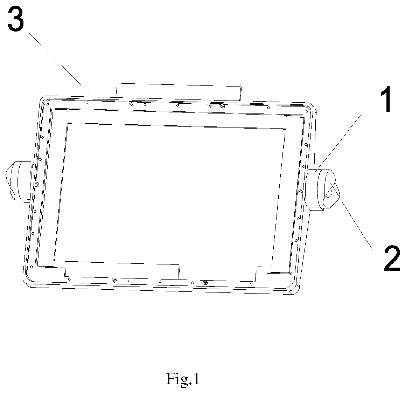

Figs. 1 to 5 schematically show a supporting structure according to an embodiment of the present invention. As shown in Fig. 1, the supporting structure comprises stoppers 1, stationary shafts 2 and a support body 3.

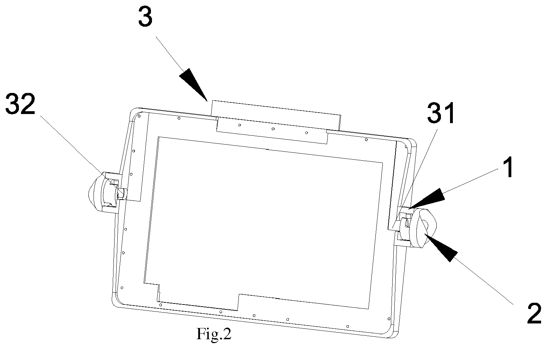

As shown in Fig. 2, the support body 3 may be formed as a rectangular frame. Support plates 31 are disposed at left and right sides of the support body 3 respectively. The support plates 31 are L-shaped. As shown in the drawings, each of the support plates 31 is fixedly connected at one end with the support body and the other end thereof passes through a side plate of the support body 3 through a groove 32 on the side plate. The support plate 31 on the left of the structure is not shown for the clarity purpose.

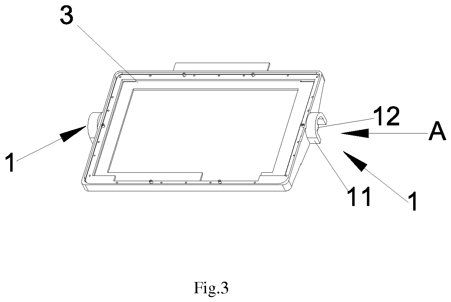

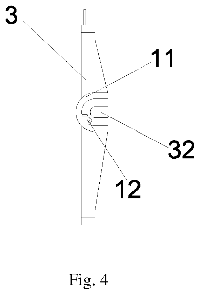

As shown in Figs. 3 and 4, each of stoppers 1 comprises a stopper body 11 and a stopper projection 12. The stopper body 11 is U-shaped, and the stopper projection 12 is provided at the bottom of the inner wall of the stopper body 11. Two stoppers 1 are disposed on opposite sides of the support body 3 respectively. That is, two stopper bodies 11 of two stoppers 1 are fixedly connected to left and right side plates of the support body 3, respectively. Meanwhile, two stoppers 1 are disposed coaxially.

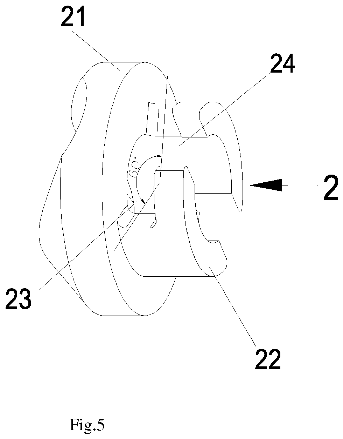

As shown in Fig. 5, each of the stationary shafts 2 comprises a shaft base 21 and a shaft portion 22 which are integrally connected with each other. The stationary shafts 2 are T-shaped along its longitudinal section. The shaft base 21 and the shaft portion 22 are formed to be cylindrical and with a hollow structure. An arc-shaped notch 23 is disposed circumferentially at an end of the shaft portion connected to the shaft base. The arc-shaped notch 23 and the stopper projection 12 are matched in shape and size, so that the stoppers 1 can rotate about the stationary shafts 2 along the arc-shaped notch 23. The outer diameter of the shaft portion 22 is smaller (such as 0.5mm) than the inner diameter of an arc portion at the bottom of the U-shaped stopper body, which can reduce the wear of the supporting structure and make the rotation of the stoppers around the stationary shaft 2 more efficient. A central angle of the arc-shaped notch 23 is an acute angle, so that a range of the rotational angle of the stoppers 1 around the stationary shafts 2 is 0 ° ∼ 90 °. For example, as shown in Fig. 5, the central angle of the curve notch 23 is 60 °, thus the range of the rotational angle of the stoppers 1 is 60°. An opening 24 is formed at the other end of the shaft portion not connected to the shaft base 21 and is communicated with the arc-shaped notch 23, thereby facilitating the installation of the stoppers on the stationary shafts. The stationary shafts 2 may be disposed on a movable device and is coaxial with the stopper 1.

The stopper 1 is positioned corresponding to the groove 32 so that one end of the support plate 32 is inserted into the hollow portion of the interior of the stationary shaft 2 when the stopper 1 is coupled with the stationary shaft 2.

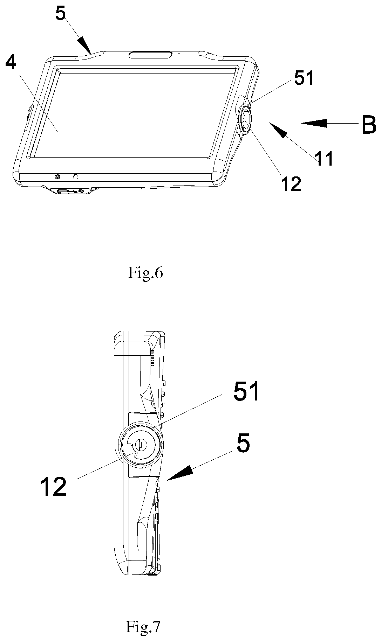

As shown in Figs. 6 and 7, a player according to an embodiment of the invention comprises a supporting structure as described above, a player member 4 and a housing 5. The player member 4 comprises a conventional multimedia player, which is referred to as supported member. The player member 4 is disposed in the support body 3 of the supporting structure. The housing 5 is disposed outside the supporting structure. A hole is provided at a position where the housing 5 corresponds in position with the stopper 1 to accommodate the stopper and allow the installation of the stationary shaft.

A movable device comprising a movable device body and a player mentioned above will be described below. The stationary shafts of the supporting structure of the player are disposed on the movable device body. For illustrating and understanding purpose, trolley is described as an example of the movable device in the illustration of following embodiments. It will be understood for those skilled in the art that the embodiments of the invention will apply to any movable devices similar to the trolley.

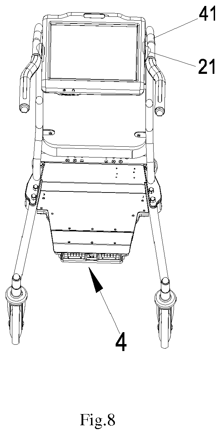

As shown in Fig. 8, the trolley comprises a trolley body 41 and a player mentioned above. The player is installed between the left and right frames of the trolley body 41, two shaft bodies 21 of the stationary shafts 2 on respective sides of the player are fixedly connected to the left and right frames of the trolley body 41 by welding or the like. Further, the player's stoppers 1 and the stationary shafts 2 are disposed coaxially, so that the player member 3 can rotate around the stationary shafts 2.

The above are merely some embodiments of the present invention. Those of ordinary skilled in the art will appreciate that various modifications and improvements can be made without departing from the concept of the present invention, and such modifications and improvements shall fall within the scope of the invention defined by the attached claims.

## Claims

1. A supporting structure comprising a support body (3), stationary shafts (2) and stoppers (1) disposed at opposite ends of said support body (3) and on a same axis with said stationary shafts (2), each of said stationary shafts (2) being provided with an arc-shaped notch (23) matching with a respective stopper of said stoppers (1) circumferentially so that the stoppers (1) are rotatable about the stationary shafts (2) along the arc-shaped notch (23), **characterized in that** each of said stoppers (1) comprises a U-shaped stopper body (11) and a stopper projection (12) provided on an inner wall of said stopper body (11), each of said stationary shafts (2) comprising a shaft base (21) and a shaft portion (22) which is in T-shaped connection with said shaft base (21), said arc-shaped notch (23) being provided at an end of the shaft portion (22) connected with the shaft base (21).

2. The supporting structure according to claim 1, wherein said shaft base (21) and said shaft portion (22) have a hollow structure.

3. The supporting structure according to claim 1, wherein a central angle of said arc-shaped notch (23) is an acute angle.

4. The supporting structure according to claim 2, wherein the outer diameter of the shaft portion (22) is smaller than the inner diameter of an arc portion at the bottom of said stopper body (11).

5. The supporting structure according to claim 2, wherein support plates (31) are disposed on said support body (3), and an end of the support plates (31) is inserted into the interior of said stationary shafts (2).

6. A player comprising a player member (4) and a supporting structure of any one of claims 1 to 5, wherein said player member comprises a multimedia player device and is disposed in said support body (3).

7. A movable device comprising a movable device body and the player of claim 6, wherein the stationary shafts (2) of the supporting structure of said player are disposed on the movable device body.

## Patentansprüche

1. Stützstruktur, umfassend einem Stützkörper (3), stationäre Wellen (2) und Anschläge (1), die an gegenüberliegenden Enden des Stützkörpers (3) und auf einer gleichen Achse wie die stationären Wellen (2) angeordnet sind, wobei jede der stationären Wellen (2) mit einer bogenförmigen Kerbe (23) versehen ist, die an einem jeweiligen Anschlag der Anschläge (1) umfangsseitig angepasst ist, so dass die Anschläge (1) um die Stationäre Wellen (2) entlang der bogenförmigen Kerbe (23) drehbar sind, **dadurch gekennzeichnet, dass** jeder der Anschläge (1) einen U-förmigen Anschlagkörper (11) und einen Anschlagvorsprung (12) umfasst, der an einer Innenwand des Anschlagkörpers (11) vorgesehen ist, jede der stationären Wellen (2) eine Wellenbasis (21) und einen Wellenabschnitt (22) umfasst, der T-förmig mit der Wellenbasis (21) verbunden ist, die bogenförmige Kerbe (23) an einem Ende des Wellenabschnitts (22) vorgesehen ist, das mit der Wellenbasis (21) verbunden ist.

2. Stützstruktur nach Anspruch 1, wobei die Wellenbasis (21) und der Wellenabschnitt (22) eine hohle Struktur aufweisen.

3. Stützstruktur nach Anspruch 1, wobei ein zentraler Winkel der bogenförmigen Kerbe (23) ein spitzer Winkel ist.

4. Stützstruktur nach Anspruch 2, wobei der Außendurchmesser des Wellenabschnitts (22) kleiner ist als der Innendurchmesser eines Bogenabschnitts am Boden des Anschlagkörpers (11).

5. Stützstruktur nach Anspruch 2, wobei Stützplatten (31) an dem Stützkörper (3) angeordnet sind, und ein Ende der Stützplatten (31) in das Innere der stationären Wellen (2) eingesetzt ist.

6. Spieler, umfassend ein Spielerelement (4) und eine Stützstruktur nach einem der Ansprüche 1 bis 5, wobei das Spielerelement eine Multimedia-Spielervorrichtung umfasst und in dem Stützkörper (3) angeordnet ist.

7. Bewegliche Vorrichtung, umfassend einen beweglichen Vorrichtungskörper und den Spieler nach Anspruch 6, wobei die stationären Wellen (2) der Stützstruktur des Spielers auf dem beweglichen Vorrichtungskörper angeordnet sind.

## Revendications

1. Structure de support comprenant un corps de support (3), des arbres stationnaires (2) et des butées (1) disposées aux extrémités opposées dudit corps de support (3) et sur un même axe que les arbres stationnaires (2), chacun desdits arbres stationnaires (2) étant pourvu d'une encoche en forme d'arc (23) adaptée à une butée respective desdites butées (1) de manière circonférentielle de sorte que les butées (1) puissent tourner autour des arbres stationnaires (2) le long de l'encoche en forme d'arc (23), **caractérisée en ce que** chacune desdites butées (1) comprend un corps de butée en forme de U (11) et une saillie de butée (12) prévue sur une paroi interne dudit corps de butée (11), chacun desdits arbres stationnaires (2) comprenant une base d'arbre (21) et une partie d'arbre (22) qui est en connexion en forme de T avec ladite base d'arbre (21), ladite encoche en forme d'arc (23) étant prévue à une extrémité de la partie d'arbre (22) reliée au base d'arbre (21).

2. Structure de support selon la revendication 1, dans laquelle ladite base d'arbre (21) et ladite partie d'arbre (22) ont une structure creuse.

3. Structure de support selon la revendication 1, dans laquelle un angle central de ladite encoche en forme d'arc (23) est un angle aigu.

4. Structure de support selon la revendication 2, dans laquelle le diamètre extérieur de la partie d'arbre (22) est inférieur au diamètre intérieur d'une partie en arc au fond dudit corps de butée (11).

5. Structure de support selon la revendication 2, dans laquelle des plaques de support (31) sont disposées sur ledit corps de support (3), et une extrémité des plaques de support (31) est insérée à l'intérieur desdits arbres stationnaires (2).

6. Lecteur comprenant un élément de lecteur (4) et une structure de support selon l'une quelconque des revendications 1 à 5, dans lequel ledit élément de lecteur comprend un dispositif de lecteur multimédia et est disposé dans ledit corps de support (3).

7. Dispositif mobile comprenant un corps de dispositif mobile et le lecteur selon la revendication 6, dans lequel les arbres stationnaires (2) de la structure de support dudit lecteur sont disposés sur le corps du dispositif mobile.
